# EUROPÄISCHE PATENTSCHRIFT

(11) **EP 1 360 710 B1**
(45) Veröffentlichungstag und Bekanntmachung des Hinweises auf die Patenterteilung: **26.05.2004**
(21) Anmeldenummer: 02712788.5
(22) Anmeldetag: 13.02.2002
(51) Int. Cl.: H01H 3/32, F16C 33/08

(54) **NIEDERSPANNUNGS-LEISTUNGSSCHALTER MIT EINER LAGERANORDNUNG FÜR DIE SCHALTWELLE**
LOW-VOLTAGE POWER SWITCH WITH A BEARING ARRANGEMENT FOR A SWITCH SHAFT
DISJONCTEUR BASSE TENSION COMPRENANT UN SYSTEME DE SUPPORT POUR L'ARBRE DE COMMANDE

(30) Priorität: 16.02.2001 DE 20103230 U
(43) Veröffentlichungstag der Anmeldung: 12.11.2003
(73) Patentinhaber: SIEMENS AKTIENGESELLSCHAFT, 80333 München (DE)
(72) Erfinder: AHLERT, Torsten, 15517 Fürstenwalde (DE); GODESA, Ludvik, 10777 Berlin (DE); LIEBETRUTH, Marc, 16548 Glienicke (DE)
(86) Internationale Anmeldenummer: PCT/DE2002/000562
(87) Internationale Veröffentlichungsnummer: WO 2002/067280

(56) Entgegenhaltungen:
- DE-C- 4 416 090
- DE-U- 29 617 388

## Beschreibung

Die Erfindung liegt auf dem Gebiet der konstruktiven Gestaltung eines in Niederspannungsnetzen eingesetzten Leistungsschalters und ist bei der Ausgestaltung der Lagerung der Schaltwelle eines solchen Schalters anzuwenden.

Niederspannungs-Leistungsschalter bestehen aus mehreren, den unterschiedlichen Teilaufgaben angepassten Baugruppen, die bei der Fertigung der Leistungsschalter miteinander verbunden werden. Die größte Baugruppe bildet dabei die Schaltpolbaugruppe, d. h. die in einem gemeinsamen Gehäuse oder in einzelnen, zu einer Einheit verbundenen Gehäusen angeordneten Schaltpole. Dabei sollen im Rahmen der Erfindung unter einem Schaltpol alle Teile eines Leistungsschalters verstanden werden, die demselben Pol eines Stromkreises zugeordnet sind, insbesondere das aus feststehenden und bewegbaren Kontakten bestehende Kontaktsystem mit seinen Tragelementen, seinen I-solierelementen und seinen Koppelgestängen zur Kopplung des Kontaktsystems des Schaltpoles mit einer für alle Schaltpole gemeinsamen Schaltwelle. - Dabei werden die von einer Antriebsvorrichtung bereit gestellten Bewegungsabläufe mittels eines dem Antrieb zugeordneten, weiteren Koppelgestänges auf die Schaltwelle übertragen.

Bisher wurde die Schaltwelle konstruktiv entweder der Antriebsvorrichtung oder der Schaltpolbaugruppe zugeordnet. Bei einem bekannten Leistungsschalter, bei dem die Schaltwelle konstruktiv der Antriebsvorrichtung zugeordnet ist, ist die Schaltwelle in ihrem mittleren Bereich - in dem die Antriebskraft in die Schaltwelle eingeleitet wird - in parallelen Wänden angeordnet, die miteinander verbunden sind und die das Tragwerk für die Antriebsvorrichtung bilden. Die beiden Enden der Schaltwelle sind in weiteren Wänden gelagert, die mit den die Antriebsvorrichtung tragenden Wänden verbunden sind (DE 44 16 090 C1). Eine Funktionsprüfung der Schaltpolbaugruppe - insbesondere eine Prüfung daraufhin, ob der von der Antriebsvorrichtung zur Verfügung gestellte Weg das ordnungsgemäße Schließen der Kontaktanordnungen der Schaltpole mit der benötigten Kontaktkraft bewirkt - ist erst in völlig zusammengebautem Zustand des Schalters möglich.

Bei einem anderen bekannten Schalter, bei dem die Schaltwelle konstruktiv der Schaltbaugruppe zugeordnet ist, ist die Schaltwelle zweiteilig ausgebildet und wird in ihrem mittleren Bereich von einem Hauptlagerkörper gehalten. Hierbei trägt der Hauptlagerkörper jeweils ein Ende der beiden Schaltwellenteile und dient gleichzeitig der einseitigen axialen Fixierung dieser beiden Schaltwellenteile. Das jeweils andere axial äußere Ende der beiden Schaltwellenteile ist durch je einen ebenfalls mit der Schaltpolbaugruppe verbundenen Hilfslagerkörper gehalten. Damit ist die Schaltwelle an der Schaltpolbaugruppe geometrisch positioniert, so dass durch eine Prüfvorrichtung, die die Antriebsbewegung des Antriebes simuliert, eine eigenständige Prüfung der Schaltpolbaugruppe erfolgen kann. Andererseits ist es bei dieser Anordnung möglich, auch die Antriebsvorrichtung eigenständig daraufhin zu prüfen, ob sie die erforderliche Drehbewegung der Schaltwelle bewirkt (DE 197 39 702 C1). - Ausgehend von dieser Anordnung ist bei einem anderen bekannten Schalter die Schaltwelle ebenfalls konstruktiv der Schaltpolbaugruppe zugeordnet. Bei diesem Schalter ist die Schaltwelle jedoch einstückig ausgebildet. Um diese einstückige Schaltwelle toleranzunempfindlich und montagefreundlich im Angriffspunkt der Schaltkräfte zu lagern, sind den beiden Enden der Schaltwelle Lagerkörper zugeordnet, die - die Schaltwelle halbschalenförmig umfassend - an der Schaltpolbaugruppe befestigt sind (DE 199 48 716 C1). Durch eine derartige Ausbildung der beiden axial äußeren Lagerkörper ist die Lagerung der Schaltwelle statisch bestimmt. Je nach Länge der Schaltwelle können bei dieser Anordnung in bekannter Weise Hilfslagerkörper zur zusätzlichen Lagerung der Schaltwelle angeordnet sein. - Auch bei diesem Schalter können sowohl die Schaltpolbaugruppe als auch die Antriebsvorrichtung vor dem Zusammenbau eigenständig geprüft werden.

Der Zusammenbau dieser beiden Baugruppen kann jedoch dazu führen, dass aufgrund von Bauteiletoleranzen, Montagetoleranzen und Schaltwellenverformungen im mittleren Bereich der Schaltwelle (insbesondere Durchbiegung und Torsion der Schaltwelle in diesem Bereich) die Schaltwelle durch die Antriebsvorrichtung nicht mehr in der erforderlichen Weise gedreht wird. Beispielsweise kann sich der Drehwinkel der Schaltwelle ändern, was zu einer Änderung der Kontaktkraft zwischen den feststehenden und den beweglichen Kontakten führt. Bei zu hoher Kontaktkraft muss die Antriebsvorrichtung stärker dimensioniert werden, was zwangsläufig aufwendigerer Maßnahmen zur Stoßdämpfung erfordert. Zu geringe Kontaktkraft führt dagegen zu einer Erwärmung und zu einem schnelleren Verschleiß der Kontakte.

Ausgehend von einem Leistungsschalter mit den Merkmalen des Oberbegriffes des Anspruches 1 (DE 199 48 716 C1) liegt der Erfindung die Aufgabe zugrunde, die Lagerbaugruppe so auszugestalten, dass die Einbaulage der Schaltwelle nach dem Zusammenbau der Antriebsvorrichtung und der Schaltpolbaugruppe derjenigen Lage der Schaltwelle entspricht, die der separaten Prüfung der Antriebsvorrichtung zugrunde lag.

Gemäß der Erfindung wird diese Aufgabe dadurch gelöst, dass bei an der Schaltpolbaugruppe befestigtem Tragwerk der Antriebsvorrichtung die axial mittlere Lagerbaugruppe zwei Lagerhalbschalen aufweist, von denen die eine an der Schaltpolbaugruppe und die andere an dem Tragwerk radial abgestützt und über Führungsflächen axial fixiert ist.

Bei einer derartigen Ausgestaltung, bei der die Lagerung der Schaltwelle statisch bestimmt bleibt, erfolgt im Bereich der Einleitung der Antriebskräfte eine präzise geometrische Zuordnung der Antriebsvorrichtung zu der Schaltpolbaugruppe. - Hierbei kann die der Schaltpolbaugruppe zugeordnete Lagerhalbschale mit Vorteil verliersicher zwischen der Schaltpolbaugruppe und der Schaltwelle gehalten sein.

Die Ankopplung der Antriebsvorrichtung an die Schaltwelle erfolgt üblicherweise mittels eines Bolzens, der zum einen einen das Ende eines Koppelgestänges der Antriebsvorrichtung bildenden ersten Hebel und zum anderen ein von der Schaltwelle radial abragenden zweiten Hebel durchgreift. - Wenn man bei einer Anordnung gemäß Anspruch 1 diesen Bolzen mit einem Bolzenkopf versieht und wenn man die Lagerbaugruppe beabstandet neben einem der beiden Hebel anordnet und eine der beiden Lagerhalbschalen auf der diesem Hebel zugeordneten Seite mit einem lappenartigen Flansch versieht, dann kann der Bolzen auf einfache und sichere Weise dadurch axial fixiert werden, dass der Hebel und der lappenartige Flansch seitliche Führungsflächen für den Bolzenkopf bilden. - Hierbei kann die Montage des Bolzens dadurch vereinfacht werden, dass die mit dem lappenartigen Flansch versehene Lagerhalbschale bei von der Schaltpolbaugruppe gelöstem Tragwerk zum Freilegen des Bolzenkopfes in Umfangsrichtung der Schaltwelle verschiebbar und durch Ansetzen des Tragwerkes an die Schaltpolbaugruppe mittels der anderen, in Umfangsrichtung der Schaltwelle fixierten Lagerhalbschale zwangsläufig in ihre Montagestellung zurückführbar ist.

Ein gemäß der Erfindung ausgebildeter Niederspannungs-Leistungsschalter ist in den Figuren 1 bis 8 dargestellt. Dabei zeigen:
- Figur 1: einen schematisch dargestellten Niederspannungs-Leistungsschalter mit einem an einer Schaltpolbaugruppe montierten Tragwerk einer Antriebsvorrichtung und mit einer Schaltwelle, derem axial mittleren Bereich eine Lagerbaugruppe mit zwei Lagerhalbschalen zugeordnet ist,
- Figur 2: eine perspektivische Ansicht der einen der beiden Lagerhalbschalen, die gemäß Figur 1 an der Schaltpolbaugruppe abgestützt ist,
- Figur 3: eine perspektivische Ansicht der anderen Lagerhalb schale, die gemäß Figur 1 an dem Tragwerk der Antriebsvorrichtung abgestützt ist,
- Figuren 4 bis 6: einen Ausschnitt des in Figur 1 dargestellten Niederspannungs-Leistungsschalters in verschiedenen Stadien des Bewegungs- und Montageablaufes und
- Figuren 7 und 8: den Ausschnitt des Niederspannungs-Leistungsschalters gemäß Figur 5 geschnitten dargestellt entlang der Linien A-A und B-B.

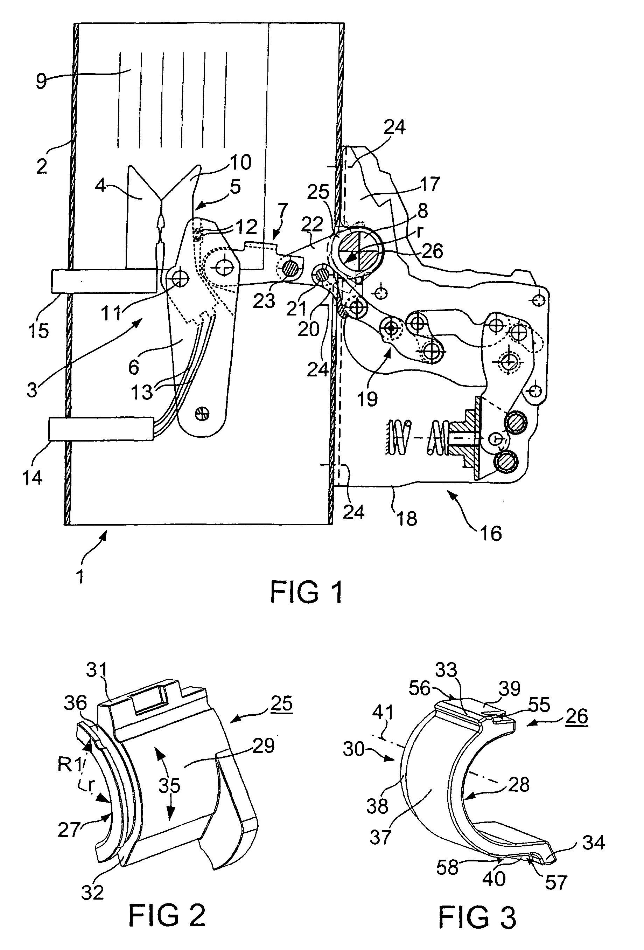

Der Niederspannungs-Leistungsschalter gemäß Figur 1 weist eine Schaltpolbaugruppe 1 auf, bei der in einem Gehäuse 2 ein Kontaktsystem 3 angeordnet ist. Das Kontaktsystem 3 ist Teil eines Schaltpols dieses Schalters und weist einen feststehenden Kontakt 4 und einen beweglichen Kontakt 5 auf. In dem Gehäuse 2 sind weiterhin ein den beweglichen Kontakt 5 tragender schwenkbarer Kontaktträger 6 und ein Koppelgestänge 7 zur Kopplung des Kontaktträgers 6 mit einer Schaltwelle 8 angeordnet. Hierbei ist in das Gehäuse 2 in bekannter Weise eine Lichtbogenlöschkammer 9 einsetzbar. Der bewegliche Kontakt 5 besteht aus mehreren parallel zueinander angeordneten Kontakthebeln 10, die in dem Kontaktträger mittels eines Gelenkbolzens 11 schwenkbar gehalten und durch je zwei Kontaktkraftfedern 12 vorgespannt sind. Biegsame Leiter 13 dienen zur Verbindung der Kontakthebel 10 mit einer unteren Anschluss-Schiene 14. Der dem beweglichen Kontakt zugeordnete feststehende Kontakt 4 ist mit einer oberen Anschluss-Schiene 15 verbunden.

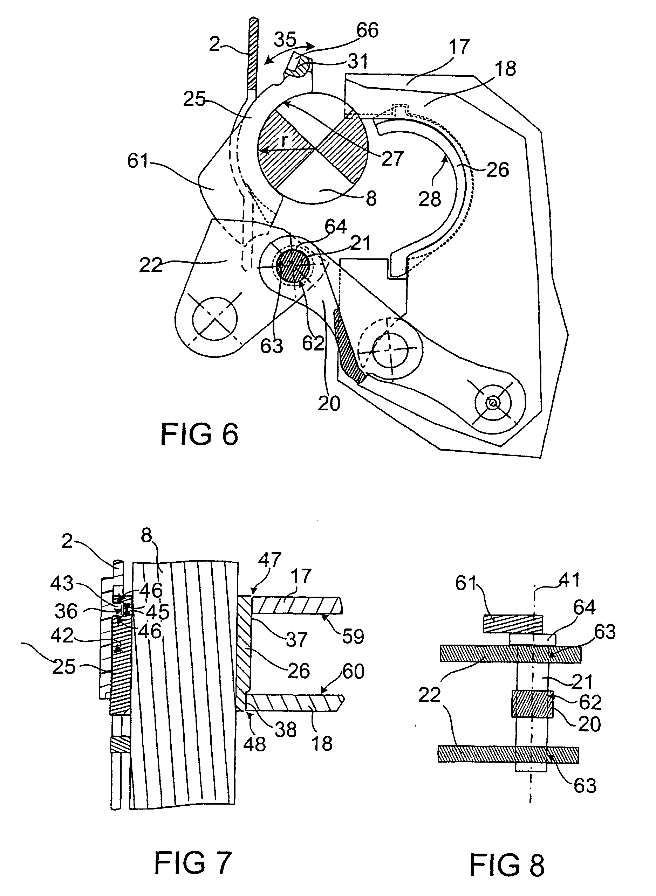

Die Schaltwelle 8 ist der Schaltpolbaugruppe in einer Weise geometrisch zugeordnet, wie es aus der DE 199 48 716 C1 bekannt ist. Hierbei sind zwei, hier nicht dargestellte, axial äußere Lagerbaugruppen - die die beiden Enden der Schaltwelle halbschalenförmig umfassen - an dem Gehäuse der Schaltpolbaugruppe befestigt. - Im axial mittleren Bereich der Schaltwelle 8 erfolgt die Einleitung der Antriebskraft einer Antriebsvorrichtung 16, die in einem aus parallelen Wänden 17 und 18 gebildeten Tragwerk gehalten ist. Hierzu ist ein das Ende eines Koppelgestänges 19 der Antriebsvorrichtung 16 bildender Hebel 20 mittels eines Bolzens 21 (vgl. auch Figur 8) mit einem auf der Schaltwelle 8 fest angeordneten und von der Schaltwelle radial abragenden zweiteilig ausgebildeten Hebel 22 gekoppelt. An den Hebel 22 ist auch dass dem Kontaktträger 6 zugeordnete Koppelgestänge 7 mittels eines weiteren Bolzens 23 angekoppelt. Das Tragwerk 17, 18 der Antriebsvorrichtung 16 ist bei montiertem Schalter mittels in der Figur 1 nicht weiter dargestellter Schraubverbindungen an dem Gehäuse 2 der Schaltpolbaugruppe 1 befestigt. Die Lage dieser Schraubverbindungen ist in der Figur 1 durch die Achsen 24 gezeigt.

Dem der Ankopplung der Antriebsvorrichtung dienenden axial mittleren Bereich der Schaltwelle ist eine aus zwei Lagerhalbschalen 25 und 26 gebildete, weitere Lagerbaugruppe zugeordnet. Hierbei ist die eine der beiden Lagerhalbschalen 25 der Schaltpolbaugruppe 1 und die andere Lagerhalbschale 26 der Antriebsvorrichtung 16 geometrisch zugeordnet.

Gemäß der Figuren 2 und 3 weist jede der beiden Lagerhalbschalen 25 und 26 jeweils einen, an den Außendurchmesser r der Schaltwelle 8 präzise angepassten, inneren Flächenabschnitt 27 bzw. 28, einen zum radialen Abstützen dienenden, kreisformig gekrümmten äußeren Flächenabschnitt 29 bzw. 30 sowie stegartig abgebogene Kanten 31 und 32 bzw. 33 und 34 auf. Zum axialen Fixieren ist an der ersten Lagerhalbschale 25 (Figur 2) im Bereich des äußeren Flächenabschnittes 29, der den Radius R1 aufweist, eine in Umfangsrichtung 35 der Schaltwelle verlaufende Nut 36 ausgebildet (vgl. auch Figur 7); an der zweiten Lagerhalbschale 26 (Figur 3) ist der äußere Flächenabschnitt 30 durch zwei aneinander grenzende Teilabschnitte 37 und 38 gebildet, wobei im Bereich des Teilabschnittes 37 Rippen 39 und 40 ausgebildet sind, die quer zur Schaltwellenachse 41 verlaufen.

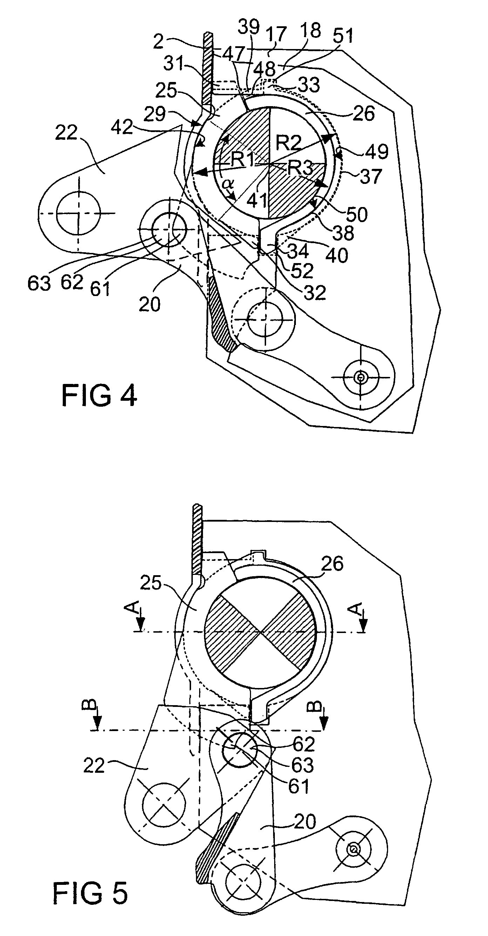

Gemäß der Figur 4 stützt sich die erste Lagerhalbschale 25 mit ihrem äußeren Flächenabschnitt 29 an einer ebenfalls mit dem Radius R1 kreisförmig gekrümmten Gegenfläche 42 des Gehäuses 2 der Schaltpolbaugruppe ab. Der Bogenwinkel α des äußeren Flächenabschnittes 29 bestimmt hierbei den Winkelbereich, innerhalb dessen die erste Lagerhalbschale bei montierter Schaltwelle in Umfangsrichtung der Schaltwelle bewegbar ist. Ein Weiterbewegen der ersten Lagerhalbschale 25 über diesen begrenzten Winkelbereich hinaus wird durch die an den äußeren Flächenabschnitt angrenzenden, stegartig abgebogenen Kanten 31 und 32 der Lagerhalbschale 25 verhindert, die beim Weiterdrehen an dem Gehäuse 2 anschlagen. - Gemäß Figur 7 weist das Gehäuse 2 im Bereich der Gegenfläche 42 einen halbschalenförmigen Innenbund 43 auf, der bei zwischen Gehäuse 2 und Schaltwelle 8 gehaltener erster Lagerhalbschale 25 in die Nut 36 hineinragt. Die Seitenflächen 45 der Nut 36 und die Seitenflächen 46 des Innenbundes 43 bilden somit einander zugeordnete Führungsflächen, über die die erste Lagerhalbschale axial fixiert ist. Die zweite Lagerhalbschale 26 stützt sich mit ihrem ersten Teilabschnitt 37 in einer randseitigen Öffnung 47 der Wand 17 und des Tragwerkes der Antriebsvorrichtung und mit ihrem zweiten Teilabschnitt 38 in einer randseitigen Öffnung 48 der Wand 18 ab. - Hierbei weist der erste Teilabschnitt 37 und ein erster Kantenabschnitt 49 der randseitigen Öffnung 47 den Radius R2 sowie der zweite Teilabschnitt 38 und ein erster Kantenabschnitt 50 der randseitigen Öffnung 48 den Radius R3 auf, wobei R3 < R2 ist. Jede der beiden stegartig abgebogenen Kanten 33 bzw. 34 der zweiten Lagerhalbschale 26 greift in eine Nut 51 bzw. 52 ein. Die Nuten 51 und 52 sind in weiteren Kantenabschnitten der randseitigen Öffnung 47 ausgebildet. Gleichzeitig liegt die eine der beiden stegartig abgebogenen Kanten 34 an der Wand 18 an. Jede der quer zur Schaltwellenachse 41 verlaufenden Rippen 39 und 40 der zweiten Lagerhalbschale 26 liegt mit ihren Seitenflächen 55 und 56 bzw. 57 und 58 (vgl. Figur 3) an den einander zugewandten Seiten 59 und 60 (vgl. Figur 7) der Wände 17 und 18 an. Diese Seitenflächen und die Wände bilden somit einander zugeordnete Führungsflächen, über die die zweite Lagerhalbschale axial fixiert ist.

Die axial mittlere Lagerbaugruppe 25, 26 ist neben dem einen Teil des Hebels 22 der Schaltwelle angeordnet. Der Hebel 22 und der mit ihm gekoppelte Hebel 20 der Antriebsvorrichtung sind im Bereich zwischen einer Einschaltstellung gemäß Figur 4 (bei der die Kontakte geschlossen sind) und einer Ausschaltstellung gemäß Figur 5 (bei der die Kontakte geöffnet sind) bewegbar. An der ersten Lagerhalbschale 25 ist ein lappenartiger Flansch 61 so ausgebildet, dass er sich parallel zur Bewegungsbahn der dem Bolzen 21 zugeordneten Durchgangslöcher 62 und 63 der Hebel 20 und 22 erstreckt. - Der gemäß der Figur 8 in die Durchgangsöffnungen 62 und 63 eingesteckte, mit einem Bolzenkopf 64 versehener Bolzen 21 ist somit in allen Phasen des Bewegungsablaufes der Hebel 20 und 22 axial dadurch fixiert, dass der eine Teil des Hebels 22 und der lappenartige Flansch 61 seitliche Führungsflächen für den Bolzenkopf 64 bilden. - Bei einer derartige Ausgestaltung ist eine montageunfreundliche und risikobehaftete Bolzensicherung mittels beispielsweise eines Sicherungsringes nicht erforderlich.

Gemäß Figur 6 ist die mit dem lappenartigen Flansch 61 versehene erste Lagerhalbschale 25 bei von dem Gehäuse 2 der Schaltpolbaugruppe gelösten Tragwerk 17, 18 in Umfangsrichtung 35 der Schaltwelle bewegbar. Um die erste Lagerhalbschale 25 leicht zu bewegen, weist sie im Bereich eines der parallel zur Schaltwellenachse verlaufenden, stegartig abgebogenen Kanten 31 eine Ausnehmung 66 auf, in der ein Werkzeug - beispielsweise ein Schraubendreher - abstützbar ist. Bei im Uhrzeigersinn in Umfangsrichtung der Schaltwelle bewegter Lagerhalbschale überdeckt der lappenartige Flansch 61 nunmehr nicht mehr die Durchgangslöcher 62 und 63 der Hebel 20 und 22, so dass der Bolzen 21 in die Durchgangslöcher einführbar ist, bis er mit dem Bolzenkopf 64 an dem einen Teil des Hebels 22 anliegt. Beim Ansetzen des die zweite Lagerhalbschale 26 stützenden und axial fixierenden Tragwerkes 17, 18 der Antriebsvorrichtung wird die erste Lagerhalbschale 25 durch die zweite Lagerhalbschale 26 zwangsläufig so weit zurückbewegt, bis die stegartig abgebogene Kante 31 an dem Gehäuse 2 anliegt. - Der innere Flächenabschnitt 27 der ersten Lagerhalbschale und der innere Flächenabschnitt 28 der zweiten Lagerhalbschale sind genau an den Schaltwellendurchmesser r angepasst, so dass über die von den beiden Lagerhalbschalen 25 und 26 eingeschlossene Schaltwelle 8 im axial mittleren Bereich der Schaltwelle eine präzise geometrische Zuordnung der Antriebsvorrichtung und der Schaltpolbaugruppe erfolgt. Nach einer derartigen Zuordnung ist das Tragwerk über die - entsprechend mit Toleranz ausgebildeten - Schraubverbindungen an dem Gehäuse der Schaltpolbaugruppe so zu befestigen, dass diese präzise Zuordnung erhalten bleibt.

## Patentansprüche

1. Niederspannungs-Leistungsschalter mit einer zumindest eine Kontaktanordnung (3) aufnehmenden Schaltpolbaugruppe (1), einem eine Antriebsvorrichtung (16) aufnehmenden Tragwerk (17,18), einer Schaltwelle (8), zur Übertragung einer Antriebskraft von der Antriebsvorrichtung auf die Kontaktanordnung und einer Lageranordnung für die Schaltwelle,
- bei dem die Lageranordnung zumindest zwei axial äußere Lagerbaugruppen und eine axial mittlere Lagerbaugruppe aufweist,
- wobei die Schaltwelle mittels der beiden axial äußeren Lagerbaugruppen an der Schaltpolbaugruppe befestigt ist,
**dadurch gekennzeichnet,**
**dass** bei an der Schaltpolbaugruppe (1) befestigtem Tragwerk (17,18) die axial mittlere Lagerbaugruppe zwei Lagerhalbschalen (25;26) aufweist, von denen die eine an der Schaltpolbaugruppe und die andere an dem Tragwerk radial abgestützt und über Führungsflächen (45;55,56,57,58) axial fixiert ist.

2. Niederspannungs-Leistungsschalter nach Anspruch 1,
**dadurch gekennzeichnet,**
**dass** die der Schaltpolbaugruppe (1) zugeordnete Lagerhalbschale (25) bei an der Schaltpolbaugruppe montierter Schaltwelle (8) verliersicher zwischen der Schaltpolbaugruppe und der Schaltwelle gehalten ist.

3. Niederspannungsleistungsschalter nach einem der Ansprüche 1 oder 2,
**dadurch gekennzeichnet,**
**dass** bei Kopplung der Antriebsvorrichtung (16) an die Schaltwelle (8) mittels eines Bolzens (21), der einen das Ende eines Koppelgestänges (19) der Antriebsvorrichtung bildenden ersten Hebel (20) und einen von der Schaltwelle (8) radial abragenden weiteren Hebel (22) durchgreift,
- die mittlere Lagerbaugruppe (25,26) beabstandet neben einem der beiden Hebel (22) angeordnet ist,
- eine der beiden Lagerhalbschalen (25) auf der diesem Hebel zugeordneten Seite mit einen lappenartigen Flansch (61) versehen ist und
- der Bolzen (21) einen Bolzenkopf (64) aufweist,
- wobei zum axialen Fixieren des Bolzens (21) der Hebel (22) und der lappenartige Flansch (61) seitliche Führungsflächen für den Bolzenkopf (64) bilden.

4. Niederspannungs- Leistungsschalter nach Anspruch 3,
**dadurch gekennzeichnet,**
**dass** die mit dem lappenartigen Flansch (61) versehene Lagerhalbschale (25) bei von der Schaltpolbaugruppe (1) gelöstem Tragwerk (17,18) zum Freilegen des Bolzenkopfes (64) in Umfangsrichtung (35) der Schaltwelle (8) verschiebbar und durch Ansetzen des Tragwerkes an die Schaltpolbaugruppe mittels der anderen, in Umfangsrichtung der Schaltwelle fixierten Lagerhalbschale (26) zwangsläufig in ihre Montagestellung zurückführbar ist.

## Claims

1. Low-voltage circuit breaker with a switching pole assembly (1) which holds at least one contact arrangement (3), a supporting mechanism (17, 18) which holds a drive apparatus (16), a switching shaft (8) for transmission of a drive force from the drive apparatus to the contact arrangement, and a bearing arrangement for the switching shaft,
- in which the bearing arrangement has at least two axially outer bearing assemblies and one axially central bearing assembly,
- with the switching shaft being mounted on the switching pole assembly by means of the two axially outer bearing assemblies,
**characterized**
**in that**, if the supporting mechanism (17, 18) is mounted on the switching pole assembly (1), the axially central bearing assembly has two bearing half shells (25; 26), one of which is supported radially on the switching pole assembly and the other of which is supported radially on the supporting mechanism, and is fixed axially via guide surfaces (45; 55, 56, 57, 58).

2. Low-voltage circuit breaker according to Claim 1,
**characterized**
**in that** the bearing half shell (25) which is associated with the switching pole assembly (1) when the switching shaft (8) is mounted on the switching pole assembly is held in a captive manner between the switching pole assembly and the switching shaft.

3. Low-voltage circuit breaker according to one of Claims 1 or 2,
**characterized**
**in that**, if the drive apparatus (16) is coupled into the switching shaft (8) by means of a bolt (21) which passes through a first lever (20), which forms the end of a coupling linkage (19) of the drive apparatus, and a further lever (22) which projects radially from the switching shaft (8),
- the central bearing assembly (25, 26) is arranged at a distance alongside one of the two levers (22),
- one of the two bearing half shells (25) is provided with a lug-like flange (61) on the side associated with this lever, and
- the bolt (21) has a bolt head (64),
- with the lever (22) and the lug-like flange (61) forming side guide surfaces for the bolt head (64), in order to fix the bolt (21) axially.

4. Low-voltage circuit breaker according to Claim 3,
**characterized**
**in that** the bearing half shell (25) which is provided with the lug-like flange (61) can be moved in the circumferential direction (35) of the switching shaft (8) in order to expose the bolt head (64) when the supporting mechanism (17, 18) has been released from the switching pole assembly (1), and can be forced to move back to its mounting position by means of the other bearing half shell (26), which is fixed in the circumferential direction of the switching shaft, by placing the supporting mechanism on the switching pole assembly.

## Revendications

1. Disjoncteur basse tension comportant un module de pôles de commutation (1) qui reçoit au moins un dispositif de contact (3), une structure porteuse (17, 18) qui reçoit un dispositif d'entraînement (16), un arbre de commande (8) destiné à transmettre une force d'entraînement du dispositif d'entraînement au dispositif de contact et un dispositif de montage pour l'arbre de commande
- Dans lequel le dispositif de montage présente au moins deux modules de montage extérieurs axialement et un module de montage médian axialement,
- l'arbre de commande étant fixé au module de commutation à l'aide des deux modules de montage extérieurs axialement,
**caractérisé en ce que**, lorsque la structure porteuse (17, 18) est fixée au module de commutation (1), le module de montage médian axialement présente deux demi-coques de montage (25 ; 26) dont l'une s'appuie sur le module de commutation et l'autre radialement sur la structure porteuse et est immobilisée axialement par l'intermédiaire de surfaces de guidage (45 ; 55 ; 56, 57, 58).

2. Disjoncteur basse tension selon la revendication 1, **caractérisé en ce que** la demi-coque de montage (25) associée au module de commutation (1) est maintenue sans danger de perte entre le module de commutation et l'arbre de commande lorsque l'arbre de commande (8) est monté sur le module de commutation.

3. Disjoncteur basse tension selon l'une des revendications 1 ou 2, **caractérisé en ce que**, lorsque le dispositif d'entraînement (16) est couplé à l'arbre de commande (8) à l'aide d'un axe (21) qui traverse un premier levier (20) qui forme l'extrémité d'une tige de couplage (19) du dispositif d'entraînement et un autre levier (22) qui dépasse radialement de l'arbre de commande (8),
- le module de montage (25, 26) médian est disposé à distance à côté d'un des deux leviers (22),
- une des deux demi-coques de montage (25) est munie du côté associé à ce levier est munie d'un collet en languette (61) et
- l'axe (21) présente une tête (64),
- le levier (22) et le collet en languette (61) formant des surfaces de guidage latérales destinées à la tête de l'axe afin d'assurer l'immobilisation axiale de l'axe (21).

4. Disjoncteur basse tension selon la revendication 3, **caractérisé en ce que** la demi-coque de montage, lorsque la structure porteuse (17, 18) est détachée du module de pôles de commutation (1 ) pour libérer la tête de l'axe (64), la demi-coque de montage (25) munie du collet en languette (61) peut être déplacée en direction de pourtour (35) de l'arbre de commande (8) et peut être ramenée dans sa position de montage de façon réglée en appliquant la structure porteuse sur le module de pôles de commutation à l'aide de l'autre demi-coque de montage immobilisée en direction de pourtour de l'arbre de commande.
